Europäisches Patentamt

European Patent Office

Office européen des brevets

(11) Veröffentlichungsnummer: **0 272 624 B1**

## EUROPÄISCHE PATENTSCHRIFT

(45) Veröffentlichungstag der Patentschrift: **11.03.92**

(21) Anmeldenummer: **87118722.5**

(22) Anmeldetag: **17.12.87**

(51) Int. Cl.5: **B07B 1/24**

(54) **Siebvorrichtung zum Aussieben von Komposterde aus verrottetem, organischen Material.**

(30) Priorität: **23.12.86 DE 3644146**

(43) Veröffentlichungstag der Anmeldung:
**29.06.88 Patentblatt 88/26**

(45) Bekanntmachung des Hinweises auf die
Patenterteilung:
**11.03.92 Patentblatt 92/11**

(84) Benannte Vertragsstaaten:
**AT BE CH DE ES FR GB IT LI LU NL SE**

(56) Entgegenhaltungen:
**CH-A- 403 683         DE-U- 8 630 074
FR-A- 1 300 408       FR-A- 2 065 217
FR-A- 2 084 914       FR-A- 2 160 528**

(73) Patentinhaber: **Doppstadt, Werner
Vossnackerstrasse 67
W-5620 Velbert 11 - Langenberg(DE)**

(72) Erfinder: **Doppstadt, Werner
Vossnackerstrasse 67
W-5620 Velbert 11 - Langenberg(DE)**

(74) Vertreter: **Wolgast, Rudolf, Dipl.-Chem. Dr. et
al
Dipl.-Phys. Jürgen Weisse Dipl.Chem. Dr. Rudolf Wolgast Bökenbusch 41 Postfach 11 03
86
W-5620 Velbert 11 Langenberg(DE)**

## Beschreibung

Die Erfindung betrifft eine Siebvorrichtung zum Aussieben von Komposterde aus verrottetem, organischem Material.

In der Forstwirtschaft, bei kommunalen Körperschaften oder bei Straßenbauämtern fallen häufig große Mengen von organischem Abfall an, beispielsweise Holzabfälle beim Verschneiden von Straßenbäumen, Abfälle von Friedhöfen oder auch Holzabfälle aus der Sperrgutabfuhr oder dem Hausmüll. Es ist wünschenswert, solche Holzabfälle nicht zu verbrennen oder einer Müllverbrennungsanlage zuzuführen, sondern sie zur Erzeugung von natürlichem Humus zu kompostieren. Durch Verbrennen oder durch eine Müllverbrennungsanlage wird die Umwelt stark belastet. Das Verbrennen in einer Müllverbrennungsanlage bringt außerdem erhebliche Kosten mit sich. Es ist daher bekannt, Holzabfälle zu zerkleinern und in Mieten zu lagern, so daß sie sich durch natürliche Zersetzung in Humus verwandeln. Zur Beschleunigung der Vorrottung werden den zerkleinerten organischen Abfällen verrottungsfördernde Mittel, z. B. Kalkstickstoff, zugeführt.

Die Zerkleinerung der organischen Abfälle führt zu Stücken unterschiedlicher Größe, die in den Mieten dementsprechend unterschiedlich schnell verrotten. Auch unterschiedliche Holzarten verrotten unterschiedlich schnell. Wenn daher die Mieten nach einiger Zeit weiterverarbeitet werden, dann hat sich im allgemeinen noch nicht das gesamte Material in brauchbare Humuserde umgewandelt. Das Material enthält vielmehr noch mehr oder weniger große, noch nicht vollständig verrottete Holzstücke. In vielen Fällen enthält das zerkleinert und in Mieten zur Verrottung angesetzte Material nicht nur verrottbare organische Abfälle, sondern auch anorganische Bestandteile wie Kunststoff oder Metall, die von der entstandenen Komposterde abzutrennen sind.

Der Erfindung liegt die Aufgabe zugrunde, eine Siebvorrichtung zu schaffen, welche speziell dafür eingerichtet ist, von dem in solchen Mieten enthaltenen Material die gebildete Komposterde auszusieben und von groben, nicht verrotteten Bestandteilen und von Kunststoff- oder Metallbestandteilen zu trennen, wobei mit einer einfachen und unkomplizierten Ausbildung der Vorrichtung ein gutes Siebergebnis und ein besonders störungsfreier Betrieb erreicht werden, besonders auch dann, wenn das zu siebende Material aus Stücken besteht, deren Abmessungen erhebliche Größenunterschiede aufweisen.

Gegenstand der Erfindung ist eine Siebvorrichtung zum Aussieben von Komposterde aus verrottetem organischen Material mit

(a) einem Einfülltrichter zum Eingeben des Materials, der aus einem oben offenen Gehäuse besteht, auf dessen Boden ein erstes Förderband läuft,

(b) einer an beiden Enden offene Siebtrommel, deren Achse parallel zur Förderrichtung des ersten Förderbandes verläuft und in welche das erste Förderband im Betrieb auf einer Seite hineinragt,

(c) Antriebsmitteln, durch welche der Siebtrommel eine Drehbewegung um ihre Achse erteilbar ist,

(d) Mitteln zum Transportieren des Materials längs der Siebtrommel von der einen Seite zur gegenüberliegenden anderen während der Drehbewegung,

(e) einem zweiten, unter der Siebtrommel laufenden Förderband zum Austragen der durch die Siebtrommel hindurchfallenden Erde,

(f) Mitteln zum Austragen der von der Siebtrommel zurückgehaltenen Bestandteile des Materials,

(g) einen parallelen Verlauf der Förderrichtung des ersten Förderbandes und der Achse der Siebtrommel wobei

(h) der Einfülltrichter eine rechteckige Einfüllöffnung bildet,

(i) von zwei gegenüberliegenden Seitenwänden des Einfülltrichters eine Seitenwand vertikal angeordnet ist und die gegenüberliegende Seitenwand schräg nach unten verläuft, und

(j) die besagten gegenüberliegenden Seitenwände parallel zur Förderrichtung des ersten Förderbandes verlaufen.

Ausgestaltungen der Erfindung sind Gegenstand der Unteransprüche.

Aus der DE-A-35 17 684 ist ein Kompostiergerät zum Zerkleinern von organischem Abfall, insbesondere von Holz bekannt, das einen auf einen Lastkraftwagen aufsetzbaren trogartigen Behälter, eine Fördereinrichtung auf dem Boden dieses Behälters, die zu einem Ende des Behälters hin fördert und ein Schlagwerk aufweist, das den Behälter an dem hinteren Ende abschließt. Diese Vorrichtung eignet sich jedoch nicht zum Absieben von Komposterde. Für Trennzwecke ist dagegen die Verwendung von Siebtrommeln bekannt (FR-A-1 300 408), wobei sich allerdings die Verwendung von Luft oder Gas als Fördermittel für das zu behandelnde Gut (FR-A-2 160 528) nicht bewährt hat.

Auch die in der nicht vorveröffentlichten DE-U-86 30 074 beschriebene Kompost-Siebmaschine weist eine drehbare Siebtrommel auf, in der Mittel zum Transportieren des Materials angeordnet sind sowie ein Fördermittel zum Austragen der durch die Siebtrommel hindurchfallenden Erde und Mittel zum Austragen der von der Siebtrommel zurückgehaltenen Bestandteile des Materials. Zum Eingeben des Materials in die Siebtrommel dient ein Einfülltrichter, der aus einem oben offenen Gehäuse besteht und auf dessen Boden ein Fördermittel läuft. Hierbei sind jedoch die parallel zur Förderrichtung des Fördermittels verlaufenden Seitenwände des Einfülltrichters nicht derart ausgebildet, daß eine Seitenwand vertikal angeordnet ist und die gegenüberliegende Seitenwand schräg nach unten verläuft, so daß eine selbsttätige Orientierung langgestreckter Materialstücke in Förderrichtung nicht stattfindet und Verstopfungen im Einfülltrichter regelmäßig nicht auszuschließen sind. Besonders wird auch die Abfuhr von langstückigem Material aus dem Einfülltrichter in die Siebtrommel dadurch erschwert, daß das im Bereich des Einfülltrichters angeordnete Fördermittel zur Siebtrommel hin ansteigend verläuft, also nicht wie beim Gegenstand der Erfindung parallel zur Längsachse der Siebtrommel, also waagerecht.

Ein Ausführungsbeispiel der Erfindung ist nachstehend unter Bezugnahme auf die zugehörigen Zeichnungen näher erläutert.

Fig. 1     ist eine perspektivische Darstellung einer erfindungsgemäßen Siebvorrichtung.

Fig. 2     ist eine schematische Seitenansicht der Siebvorrichtung.

Fig. 3     ist eine schematische Endansicht der Siebvorrichtung von rechts in Fig.2.

Fig. 4     zeigt schematisch einen Querschnitt durch den Einfülltrichter bei der Siebvorrichtung von Fig.2.

Fig. 5     veranschaulicht eine hydraulische Lenkmöglichkeit für das fahr- und lenkbare Chassis der Siebvorrichtung.

Fig. 6     zeigt schematisch eine Ausblasvorrichtung, mittels welcher leichte Kunststoffstücke, die durch das Sieb zusammen mit der Komposterde hindurchgefallen sind, aus dieser Komposterde durch einen Luftstrom ausgeblasen werden.

Fig. 7     zeigt eine Ansicht von rechts in Fig.6, wobei das in Fig.6 rechte Förderband weggelassen ist.

Fig. 8     zeigt schematisch die Regelung des Förderbandes im Einfülltrichter in Abhängigkeit von der Belastung der Siebtrommel.

Fig. 9     zeigt eine Einrichtung zum Spannen des Förderbandes im Einfülltrichter.

Fig.10     zeigt schematisch eine Ausbildung der Siebtrommel aus zwei teleskopartig ineinander geführten Trommelkörpern, die zu Veränderung der effektiven Sieböffnungen gegeneinander verschoben und ggf. verdreht werden können.

Fig.11     zeigt eine Möglichkeit der Ausbildung der Sieböffnungen bei den Trommelkörpern von Fig.10.

Fig.12     zeigt eine andere Möglichkeit der Ausbildung der Sieböffnungen bei den Trommelkörpern von Fig.10.

Fig.13     zeigt einen fernsteuerbaren Fahrantrieb für die Siebvorrichtung.

Fig.14     zeigt eine fernsteuerbare Lenkung.

Die Siebvorrichtung weist ein Chassis 10 mit Hinterrädern 12 und Vorderrädern 14 auf. Die Vorderräder 14 sind lenkbar. Zu diesem Zweck sind die Vorderräder 14 in einem Lenkgestell 16 gelagert. Das Lenkgestell 16 ist in einem Drehkranz 18 um eine vertikale Achse 20 drehbar an dem Chassis 10 gelagert. Über eine an dem Lenkgestell 16 angreifende Kupplungsvorrichtung 22 ist das Chassis 10 mit einem Zugfahrzeug kuppelbar.

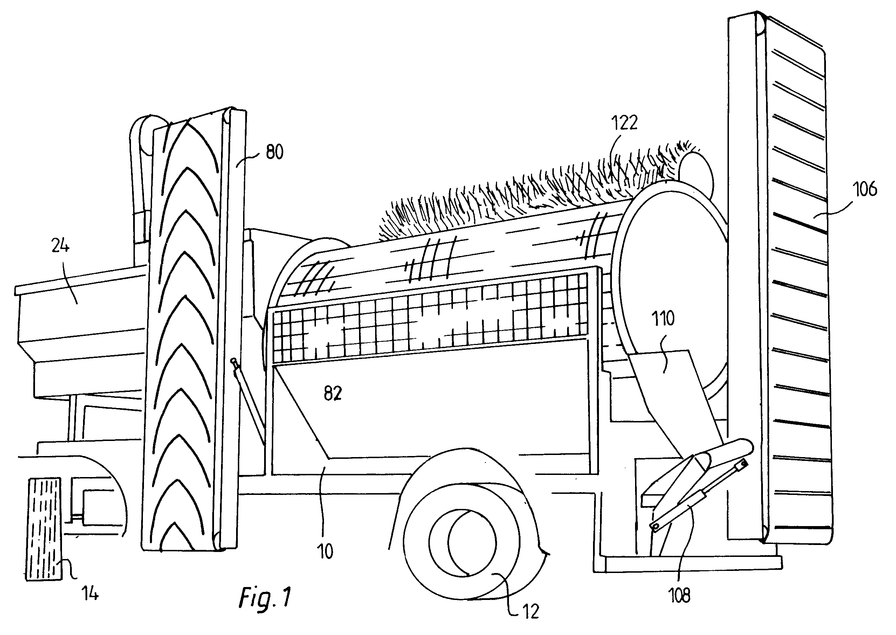

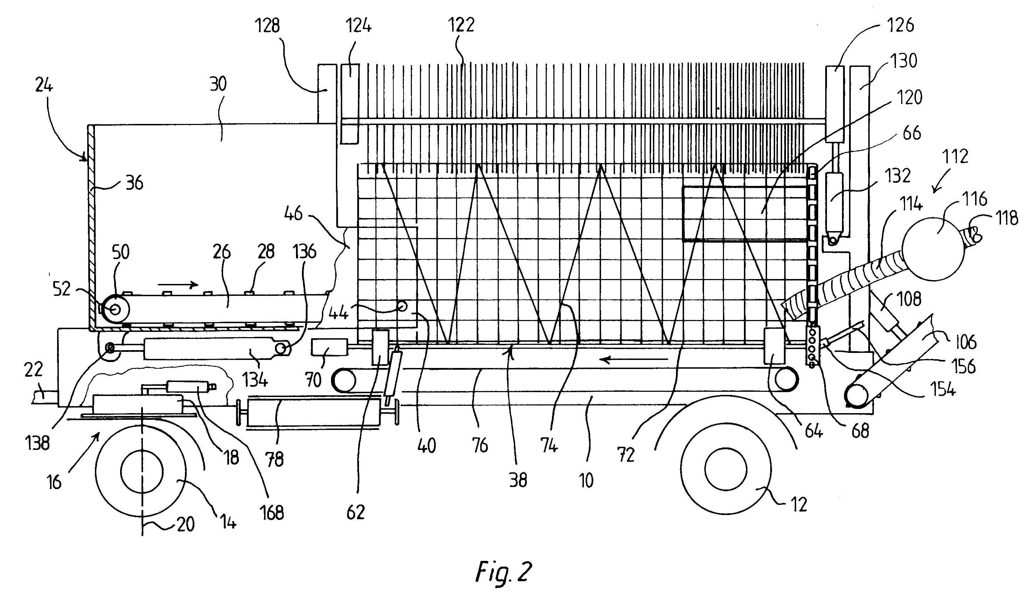

Auf dem Chassis 10 ist am vorderen Ende, d.h. links in Fig.1 und 2 ein Einfülltrichter 24 zum Eingeben des Materials angeordnet. Der Einfülltrichter 24 besteht aus einem oben offenen, in Draufsicht rechteckigem Gehäuse. Auf dem Boden dieses Gehäuses läuft in Längsrichtung des Gerätes, d.h. von links nach rechts in Fig.2 fördernd, ein erstes Förderband 26 mit quer verlaufenden Mitnehmerleisten 28. Der Einfülltrichter 24 bildet eine rechteckige Einfüllöffnung 30. Von zwei gegenüberliegenden Seitenwänden 32 und 34 des Einfülltrichters 24 ist eine Seitenwand 32 vertikal angeordnet. Die gegenüberliegende Seitenwand 34 verläuft schräg nach unten. Die beiden gegenüberliegenden Seitenwände 32 und 34 verlaufen parallel zur Förderrichtung des ersten Förderbandes 26, also in Längsrichtung. Am vorderen Ende ist der Einfülltrichter 24 durch eine vertikale Stirnwand 36 abgeschlossen.

Die beschriebene Ausbildung des Einfülltrichters 24 gewährleistet eine sichere Abförderung des eingefüllten Materials. Wenn der Einfülltrichter zwei gegenüberliegende, schräg verlaufende Seitenwände aufweist, dann rutscht das längs der beiden Seitenwände nach innen gelenkte Material gegeneinander und bildet eine Brücke, die sich auf beiden Seiten an den schrägen Seitenwänden abstützt. Das Förderband darunter läuft leer. Bei einer Anordnung in der beschriebenen Art, bei welcher die eine Seitenwand 32 vertikal ist, kann dies nicht geschehen. Das Material rutscht an der senkrechten Seitenwand 32 nach unten auf das Förderband 26 und wird abtransportiert, wodurch das Material auf der schrägen Seitenwand 34 nachrutschen kann.

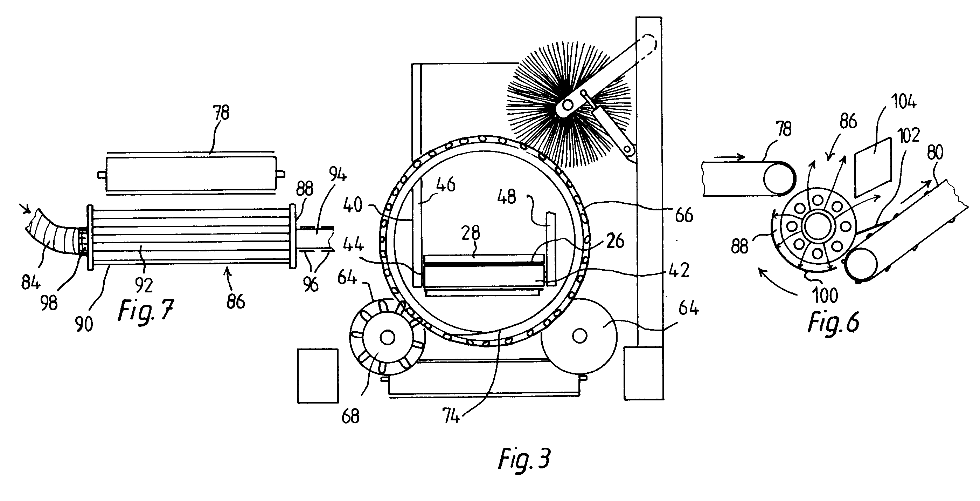

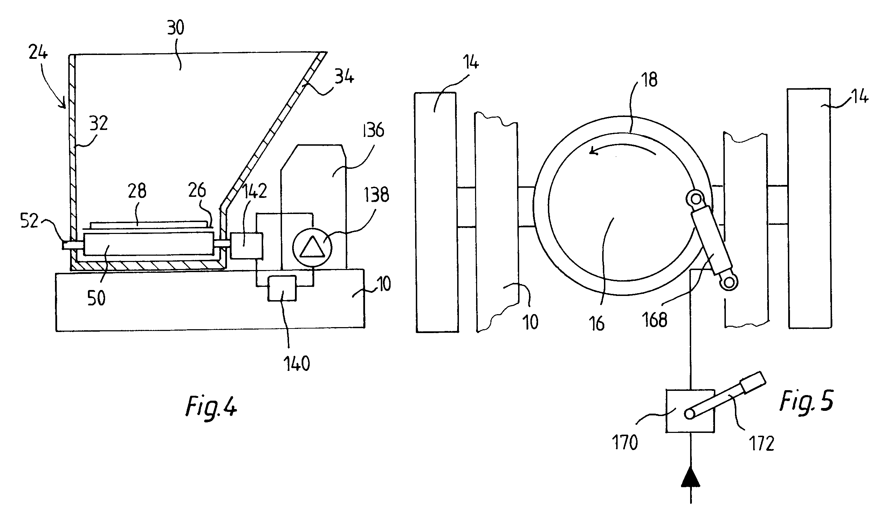

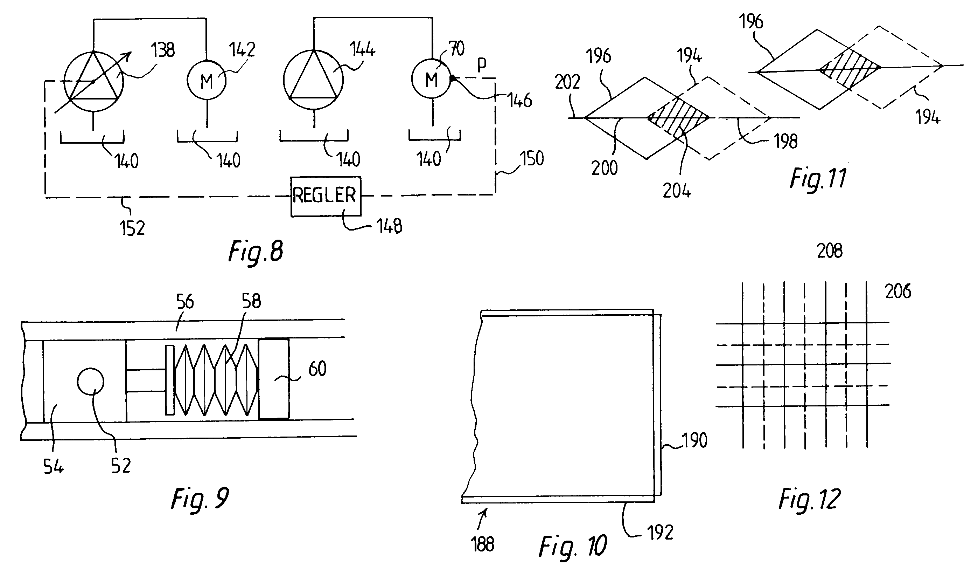

Hinter dem Einfülltrichter 24 sitzt auf dem Chassis 10 eine an beiden Enden offene Siebtrommel 38. Die Achse der Siebtrommel 38 verläuft parallel zur Förderrichtung des ersten Förderbandes 26, also in Längsrichtung des Gerätes. Das erste Förderband 26 ragt im Betrieb in das vordere, in Fig.2 linke, Ende der Siebtrommel 38 hinein. Das Förderband 26 läuft dabei an seinem in Fig.2 rechten Ende in einem im Querschnitt u-förmigen nach rechts in Fig.2 offenen Teil 40 des Einfülltrichters 24. An dem rechten Ende ist das Förderband über eine Rolle 42 (Fig.3) geführt. Die Rolle 42 ist mit einer Welle 44 (Fig.2 und 3) in den senkrechten Seitenwänden 46 und 48 des Teils 40 gelagert. An seinem in Fig.2 linken Ende ist das erste Förderband 26 über eine Rolle 50 geführt. Die Rolle 50 ist mit einer Welle 52 (Fig.2 und 9) in Lagerteilen 54 gelagert. Die Lagerteile 54 sind in Führungen 56 längsbeweglich an dem Chassis 10 geführt. Sie sind durch Tellerfedern 58 vorgespannt, die an einem chassisfesten Widerlager 60 abgestützt sind (Fig.9). Dadurch wird das erste Förderband 26 ständig straff gespannt gehalten, ohne daß ein Nachstellen der Bandspannung erforderlich ist.

Die Siebtrommel 38 ist auf zwei Paaren von Rollen 62 und 64 drehbar gelagert. In Fig.2 ist von jedem Paar nur eine Rolle sichtbar. Die Rollen 62 und 64 sind frei drehbar gelagert und haben keine Antriebsfunktion. Zum Antrieb der Siebtrommel 38 ist an der Siebtrommel 38 eine Verzahnung 66 angebracht. Die Verzahnung 66 ist von einer am hinteren Ende um den Umfang der Siebtrommel 38 herumgelegten und mit dieser verschweißten Kette gebildet. Mit der Verzahnung 66 ist ein mit Zähnen versehenes Rad 68 in Form eines Kettenrades in Eingriff. Das Rad 68 wird von einem Hydraulikmotor 70 über eine Welle 72 angetrieben. Der Hydraulikmotor 70, die Welle 72, das mit Zähnen versehene Rad 68 und die Verzahnung 66 bilden Antriebsmittel, durch welche der Siebtrommel 38 eine Drehbewegung um ihre Achse erteilbar ist.

Die Siebtrommel 38 enthält Mittel zum Transportieren des Materials längs der Siebtrommel 38 von der einen Seite, links in Fig.2, zur gegenüberliegenden anderen Seite während der Drehbewegung. Diese Mittel zum Transportieren des Materials sind von einer auf der Innenseite der Siebtrommel 38 angebrachten, schraubenförmigen Mitnehmerleiste 74 gebildet. Es hat sich in der Praxis als besonders vorteilhaft erwiesen, wenn die Höhe dieser Mitnehmerleiste 74 etwa zehn Zentimeter beträgt. Bei der Drehung wird das Material zunächst in Umfangsrichtung ein Stück mitgenommen, rutscht dann zur jeweils tiefsten Stelle der Siebtrommel 38 zurück und wird dabei durch die schräg verlaufende Mitnehmerleiste 74 in Richtung auf das hintere Ende der Siebtrommel 38 bewegt. Es tritt dabei ein gewisser Überlauf ein: Ein Teil des Materials fällt dabei auf die Einlaßseite, also die in Fig.2 linke Seite, des betreffenden Abschnitts der Mitnehmerleiste 74 zurück und vermindert so den Materialfluß oder die mittlere Geschwindigkeit des Materials durch die Siebtrommel 38. Wenn die Mitnehmerleiste zu hoch ist, wird das Material zu schnell zum hinteren Ende der Siebtrommel 38 transportiert. Die feinkörnigen Bestandteile des Materials, die Komposterde, sind dann noch nicht hinreichend ausgesiebt, so daß ein Teil der Komposterde mit den groben Bestandteilen, Holzstücken, Kunststoffteilen oder Blechdosen am hinteren Ende der Siebtrommel 38 ausgetragen wird. Ist die Mitnehmerleiste 74 zu flach, dann wird der Überlauf zu stark, und dann werden die groben Bestandteile des Materials zu langsam transportiert, so daß sich ein Stau aufbaut.

Die feinkörnigen Bestandteile des Materials bestehen überwiegend aus der durch Verrottung von organischem Material gebildeten Komposterde. Diese feinkörnigen Bestandteile fallen bei der Wanderung des Materials durch die Sieböffnungen der Siebtrommel 38 hindurch auf ein zweites Förderband 76. Dieses zweite Förderband 76 läuft, wie der Pfeil in Fig.2 andeutet, von rechts nach links in Fig.2. Von dem zweiten Förderband 76 fällt das feinkörnige Material auf ein drittes Förderband 78. Das dritte Förderband 78 ist unter dem einfülltrichterseitigen Ende des zweiten Förderbandes 76 angeordnet und fördert quer zur Förderrichtung des zweiten Förderbandes 76. Unter dem austragseitigen Ende des dritten Förderbandes 78 ist ein viertes Förderband 80 (Fig.1 und 6) angeordnet. Im Betrieb springt das vierte Förderband 80 von der Siebvorrichtung schräg nach oben gerichtet seitlich vor und häuft das gesiebte Material auf. Wie am besten aus Fig.1 ersichtlich ist, ist das vierte Förderband 80 schwenkbar an dem Chassis 10 angelenkt und durch einen hydraulischen Stellmotor 82 in Form eines Hydraulikzylinders in eine vertikale Stellung hochschwenkbar. Diese hochgeschwenkte Stellung ist in Fig.1 gezeigt. Die hochgeschwenkte Stellung dient dazu, einen Transport der Siebvorrichtung auch über die Straßen zu ermöglichen.

Zwischen dem dritten Förderband 78 und dem vierten Förderband 80 ist eine mit einem (nicht dargestellten) Gebläse über einen Schlauch 84 verbundene Ausblasvorrichtung 86 vorgesehen. Die ausgesiebten feinkörnigen Bestandteile des Materials enthalten neben der gewünschten Komposterde auch unerwünschte Bestandteile wie Stücke von Kunststoffolie, Kunststoffteilchen usw. Es hat sich gezeigt, daß solche unerwünschten Bestandteile wesentlich leichter sind als die relativ schwere Komposterde. Solche leichten Bestandteile werden durch die Ausblasvorrichtung aus dem gesiebten Material ausgeblasen.

Wie aus Fig.6 und 7 ersichtlich ist, sitzt die Ausblasvorrichtung 86 unterhalb des austragseitigen Endes des dritten Förderbandes 78. Die Ausblasvorrichtung 86 weist eine Trommel 88 auf, deren Mantelfläche von zueinander parallelen Stäben 90 gebildet ist. Zwischen den Stäben 90 sind schmale Luftaustrittsschlitze 92 gebildet. Die Trommel 88 ist mit einer Welle 94 in Lagern 96 einseitig gelagert. Auf der den Lagern 96 abgewandten Seite der Trommel 88 ist das Innere der Trommel 88 über einen zu der Trommel 88 koaxialen, drehbaren Anschluß 98 mit dem Schlauch 84 verbunden. Es wird also ein Gebläseluftstrom aus dem Schlauch 84 in das Innere der Trommel 88 eingeblasen, wie in Fig.7 durch einen Pfeil angedeutet ist. Die Trommel 88 wird um ihre quer zur Förderrichtung des dritten und des vierten Förderbandes 78 bzw. 80 verlaufende Achse angetrieben. Dabei ist die Umfangsgeschwindigkeit der Trommel 88 größer als die Transportgeschwindigkeit des dritten Förderbandes.Auf dem unteren Umfangsabschnitt der Trommel 88 zwischen drittem und viertem Förderband 78 bzw. 80 ist eine Abdeckung 100 vorgesehen, welche die Luftaustrittsschlitze 92 dort abdeckt. Ein Abstreifer 102 liegt federnd an der Trommel 88 und dem vierten Förderband 80 an.

Das gesiebte Material wird von dem dritten Förderband 78 auf die Trommel 88 geworfen und von dieser zu dem vierten Förderband 80 mitgenommen. Da die Umfangsgeschwindigkeit der Trommel wesentlich größer ist als die Fördergeschwindigkeit des dritten Förderbandes 78, wird auf der Trommel 88 auf dem Weg zu dem vierten Förderband 80 eine relativ dünne Schicht des gesiebten Materials gebildet. Diese dünne Schicht wird von Luftströmen durchblasen, die durch die Luftaustrittsschlitze 92 austreten. Dabei bleibt die relativ schwere Komposterde liegen und wird von der Trommel 88 zu dem vierten Förderband 80 mitgenommen, während leichte Bestandteile, insbesondere Kunststoff, weggeblasen werden. Es können geeignete Mittel, z.B. in Form von Luftleitblechen 104, zum seitlichen Wegleiten der weggeblasenen Bestandteile vorgesehen sein.

Es wird auf diese Weise reine Komposterde erhalten, die durch die Siebtrommel 38 von groben Bestandteilen und durch die Ausblasvorrichtung 86 von Fremdkörpern befreit ist.

An dem in Fig.2 rechten Ende des Chassis 10 ist unterhalb des Endes der Siebtrommel ein fünftes Förderband 106 schwenkbar angelenkt. Dieses fünfte Förderband 106 erstreckt sich in der Verlängerung der Siebtrommel 38 in Längsrichtung des Gerätes.

Das fünfte Förderband 106 erhält das aus der Siebtrommel 38 austretende grobe Material, welches nicht durch die Sieböffnungen der Siebtrommel 38 hindurchgefallen ist. Für dieses grobe Material erfolgt ein gerade durchgehender Materialtransport ohne Umlenkungen von dem Einfülltrichter 24 mit erstem Förderband 26 über die Siebtrommel 38 zu dem fünften Förderband 106. Dieser gerade durchgehende Materialtransport ist sehr vorteilhaft, wenn das aufgegebene Material lange Teile wie Äste oder lange Bänder enthält. Solche Teile werden gerade durch die Siebvorrichtung hindurchgeführt, ohne daß sie sich verklemmen oder verwirren können. Auch das fünfte Förderband 106 ist schwenkbar an dem Chassis 10 angelenkt und durch einen hydraulischen Stellmotor 108 in Form eines Hydraulikzylinders zum Transport in eine vertikale Stellung hochschwenkbar. In Fig.1 ist das fünfte Förderband 106 in dieser vertikalen Stellung dargestellt. Leitbleche 110 (Fig.1) dienen dazu, das aus der Siebtrommel 38 austretende Material sicher auf das fünfte Förderband 106 zu lenken.

An dem austragseitigen, in Fig.2 rechten Ende der Siebtrommel 38 ist eine Absaugeinrichtung 112 angeordnet. Die Absaugvorrichtung 112 dient zum Absaugen leichter Bestandteile, wie von Kunststoffbeuteln, in den von der Siebtrommel zurückgehaltenen Bestandteilen des Materials. Die Absaugeinrichtung 112 enthält einen Absaugschlauch 114, der in das Ende der Siebtrommel 38 eingeführt wird, und ein Sauggebläse 116. Die abgesaugten Bestandteile werden über einen Schlauch 118 in einen (nicht dargestellten) Abfallbehälter gefördert. In dem Ende der Siebtrommel 38 ist weiterhin ein Metallabscheider 120 angeordnet. Solche Metallabscheider sind an sich bekannt. Deshalb ist der Metallabscheider hier nur schematisch angedeutet. Der Metallabscheider 120 entfernt aus dem Material Blechdosen oder ähnliche Fremdkörper. Das auf das fünfte Förderband 106 fallende Material enthält dann nur noch grobe, organische Teile wie Holzstücke. Diese werden von dem fünften Förderband 106 aufgehäuft. Sie können benutzt werden, um neue Mieten zu "impfen" und die Verrottung derselben zu beschleunigen. Solche Holzstücke, die schon längere Zeit der Verrottung ausgesetzt waren, sind nämlich reiche Kulturen von verrottungsfördernden Bakterien.

Oberhalb der Siebtrommel 38 ist eine Bürstenwalze 122 angeordnet. Diese Bürstenwalze 122 dient dazu, die Siebtrommel 38 bei deren Drehung ständig zu reinigen und die Sieböffnungen offen zu halten. Die Bürstenwalze 122 ist in Armen 124,126 gelagert. Die Arme 124 und 126 sind schwenkbar an Ständern 128 bzw. 130 angelenkt. Die Arme 124,126 sind durch einen hydraulischen Stellmotor 132 in Form eines Hydraulikzylinders verschwenkbar. Auf diese Weise kann einmal die genaue Höhe der Bürstenwalze 122 relativ zu der Siebtrommel 38 reguliert werden. Taucht die Bürstenwalze 122 zu tief in die Siebtrommel 38 ein, ist sie einem übermäßig starken Verschleiß unterworfen. Ist jedoch die Bürstenwalze zu weit angehoben, ist die Reinigung der Siebtrommel 38 unvollkommen. Der hydraulische Stellmotor 132 hat aber auch die Aufgabe, die Bürstenwalze 122 vollständig von der Siebtrommel 38 abzuheben und hochzuschwenken.

Die Siebtrommel 38 liegt dann frei auf den Rollen 62 und 64 auf.

Der Einfülltrichter 24 ist längsverschiebbar auf dem Chassis 10 geführt. An dem Einfülltrichter 24 greift ein hydraulischer Stellmotor 134 an. Der hydraulische Stellmotor 134 ist ein Hydraulikzylinder, der einerseits bei 136 am Chassis 10 und andererseits bei 138 an dem Einfülltrichter 24 angreift. Durch den Stellmotor 134 kann der Einfülltrichter 24 nach links in Fig.2 verschoben werden, bis der Teil 40 des Einfülltrichters 24 vollständig aus der Siebtrommel 38 herausgezogen ist.

Die Siebtrommel 38 kann jetzt bequem von den Rollen 62 und 64 herabgerollt werden. Die Siebtrommel 38 kann dann z.B. durch eine andere Siebtrommel mit einer anderen Maschenweite ersetzt werden.

Wenn das zu siebende Material in den Einfülltrichter 24 zu schnell eingegeben wird, dann kann ein Stau in der Siebtrommel 38 auftreten. Das macht sich dadurch bemerkbar, daß das von dem Hydraulikmotor 70 zum Drehen der Siebtrommel 38 aufzubringende Drehmoment und damit auch der Druck in dem Hydraulikmotor 70 ansteigt. Dieser Druckanstieg wird benutzt, um die Geschwindigkeit des ersten Förderbandes 26 herunterzufahren. Damit wird die Menge an Material reduziert, die von dem Einfülltrichter 24 an die Siebtrommel 38 abgegeben wird, solange bis die Siebtrommel 38 wieder mit normaler Last arbeitet. Der damit verbundene Anstieg des Materials in dem Einfülltrichter 24 signalisiert dem Benutzer sehr schnell die Überlastung und verhindert weitere Materialaufgabe. Diese Regelung wird nachstehend unter Bezugnahme auf Fig.4 und 8 erläutert.

Auf dem Chassis 10 ist eine Brennkraftmaschine 136 (Fig.4) angeordnet, üblicherweise ein Dieselmotor. Diese Brennkraftmaschine 136 treibt Hydraulikpumpen für die verschiedenen Hydraulikkreise. In Fig.4 ist schematisch eine als Axialkolbenpumpe mit veränderbarem Fördervolumen ausgebildete Hydraulikpumpe 138 dargestellt, die Öl aus einem Sumpf 140 ansaugt und einem Hydraulikmotor 142 zuführt. Das entspannte Öl aus dem Hydraulikmotor 142 fließt wieder in den Sumpf 140 zurück. Der Hydraulikmotor 142 ist mit der Rolle 50 des ersten Förderbandes 26 gekuppelt und treibt über diese Rolle 50 das Förderband 26 an. Durch Veränderung der Fördermenge der Hydraulikpumpe 138 kann die Geschwindigkeit des Hydraulikmotors 142 und damit des Förderbandes 26 verändert werden.

Von der Brennkraftmaschine 136 wird eine zweite, in Fig.4 nicht dargestellte Hydraulikpumpe 144 angetrieben. Die Hydraulikpumpe 144 saugt Öl aus dem Sumpf 140 an und gibt dieses auf den Hydraulikmotor 70 (Fig.2), der über die Welle 72 und das Rad 68 sowie die Verzahnung 66 die Siebtrommel 38 antreibt. Der Arbeitsdruck p des Hydraulikmotors 70 wird mittels eines Druckfühlers 146 abgegriffen. Das Signal des Druckfühlers 146 beaufschlagt einen Regler 148, wie durch die gestrichelte Linie 150 in Fig.8 dargestellt ist. Wenn der von dem Druckfühler 146 gemessene Druck p einen vorgegebenen Wert überschreitet, wird die Fördermenge der Hydraulikpumpe 138 zurückgestellt. Das ist durch die gestrichelte Linie 152 in Fig.8 dargestellt. Es wird also von dem Druck p im "Siebtrommelkreis" die Hydraulikpumpe im "Einfülltrichterkreis" gesteuert.

Die Hydraulikpumpe 70 treibt über ein Gelenk 154 und eine Welle 156 auch das fünfte Förderband 106.

Die Siebvorrichtung mit dem Chassis 10 und Rädern 12,14 wird zum Transport von einem Einsatzort zum anderen von einem Zugfahrzeug gezogen. Es ist jedoch im allgemeinen erforderlich, die Siebvorrichtung am Einsatzort um kleine Strecken fortzubewegen. Das ist beispielsweise der Fall, wenn über das Förderband 80 ein Haufen bestimmter Höhe von Komposterde aufgeschüttet worden ist und die Siebvorrichtung vorgerückt werden muß, um neben dem aufgeschütteten Haufen einen neuen Haufen aufzuschütten. Es wäre sehr lästig, wenn dann jedesmal ein Zugfahrzeug vorgespannt werden müßte. Es wäre dann auch nicht möglich, die Siebvorrichtung mit nur einem Maschinenführer zu betreiben, was angestrebt wird.

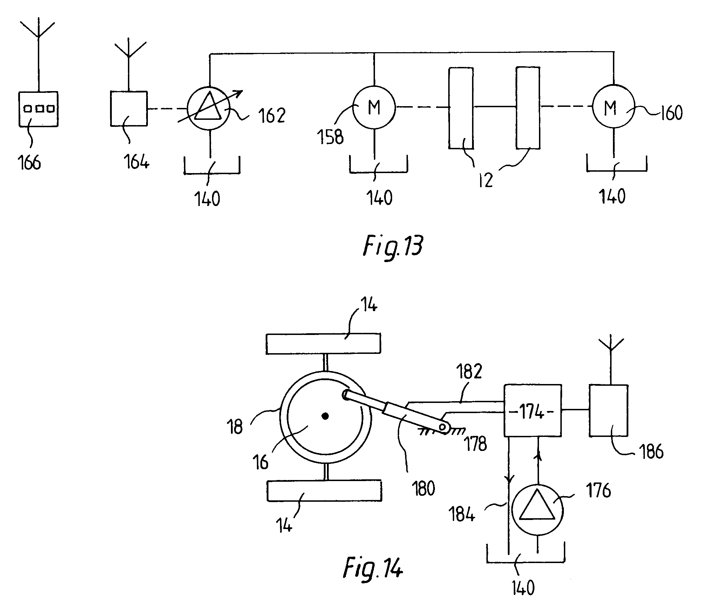

Aus diesem Grunde sind Antriebsräder des fahrbaren Chassis 10, nämlich die Räder 12, wahlweise durch einen oder mehrere Hydraulikmotore 158,160 (Fig.13) antreibbar. Die Hydraulikmotore 158 und 160 sind durch eine von der Brennkraftmaschine 136 angetriebene Hydraulikpumpe 162 gespeist. Die Hydraulikpumpe 162 ist eine in ihrer Fördermenge regelbare Axialkolbenpumpe. Die Fördermenge der Hydraulikpumpe 162 ist über eine Funkfernsteuerung mit einem an der Siebvorrichtung vorgesehenen Empfänger 164 und einem vom Maschinenführer betätigbaren Sender 166 veränderbar.

Auf diese Weise wird die sowieso an der Siebvorrichtung vorhandene Brennkraftmaschine 136 ausgenutzt, um kleinere Ortsveränderungen der Siebvorrichtung am Einsatzort vorzunehmen. Durch die Verwendung einer Funkfernsteuerung wird erreicht, daß einerseits nicht ein besonderer Fahrersitz für den Maschinenführer vorgesehen zu werden braucht aber andererseits der Maschinenführer beim Bewegen der Siebvorrichtung nicht irgendwelche Steuerglieder unmittelbar an dem Gerät zu bedienen braucht. Die Bedienung kann aus der Ferne erfolgen, wodurch die Gefahr von Unfällen verringert wird. Auch kann sich der Maschinenführer stets so postieren, daß er die vorzunehmende Bewegung der Siebvorrichtung optimal überwachen kann.

Gelegentlich kann es erforderlich sein, daß die Siebvorrichtung bei solchen Ortsveränderungen am Einsatzort auch gelenkt wird. Bei Verwendung eines Zugfahrzeuges erfolgt diese Lenkung über die an dem Lenkgestell angreifende Kupplungsvorrichtung 22. Um auch für die Lenkung einen Einmannbetrieb zu ermöglichen, ist ein hydraulischer Stellmotor 168 in Form eines Hydraulikzylinders vorgesehen, der an dem Lenkgestell 16 angreift und über eine Steuereinheit 170 (Fig.5) mit Druckflüssigkeit beaufschlagbar ist.

Bei der Anordnung nach Fig.5 ist eine manuell mittels eines Hebels 172 betätigbare Steuereinheit 170 vorgesehen. Statt dessen kann die Steuereinheit auch durch eine Fernsteuerung betätigbar sein. Eine solche Anordnung ist in Fig.14 schematisch dargestellt.

Bei der Ausführung nach Fig.14 ist die Steuereinheit 174 eine Schiebersteuerung, über welche wahlweise Drucköl von einer Hydraulikpumpe 176 über eine Leitung 178 in einen Hydraulikzylinder 180 auf eine Seite eines doppeltwirkenden Kolbens geleitet wird, während der Hydraulikzylinder auf der anderen Seite des doppeltwirkenden Kolbens über Leitungen 182 und 184 mit dem Sumpf 140 verbunden ist, oder die Leitung 178 über Leitung 184 mit dem Sumpf 140 verbunden und Leitung 182 mit der entsprechenden Seite des doppeltwirkenden Kolbens von Drucköl beaufschlagt ist. Die Steuereinheit 174 ist von dem Empfänger 186 einer Funkfernsteuerung in die eine oder in die andere dieser Schieberstellungen oder in eine neutrale Mittelstellung steuerbar. In der Mittelstellung sind beide Leitungen 178 und 182 abgesperrt, und die Hydraulikpumpe 176 ist über Leitung 184 mit dem Sumpf 140 verbunden.

Auf diese Weise kann das Lenkgestell 16 mit hydraulischer Hilfskraft, ggf. ferngesteuert, gedreht und damit die Siebvorrichtung auch gelenkt werden.

Statt einer Funkfernsteuerung kann auch irgendeine andere Fernsteuerung, beispielsweise eine Infrarotsteuerung, vorgesehen werden.

In Fig.2 ist eine Siebtrommel 38 mit einem einzigen Trommelkörper dargestellt. Wenn eine andere Größe der Sieböffnungen verlangt wird, wird der Trommelkörper mit Hilfe des beschriebenen Mechanismus freigelegt und von den Lagerrollen 62,64 heruntergerollt und durch einen anderen Trommelkörper ersetzt.

Fig.10,11 und 12 zeigen andere Möglichkeiten der Veränderung der Sieböffnungen.

Wie in Fig.10 schematisch dargestellt ist, besteht die Siebtrommel 188 aus einem Paar von Trommelkörpern 190 und 192, von denen der eine Trommelkörper 190 in dem anderen Trommelkörper 192 geführt ist. Jeder der Trommelkörper 190,192 weist Sieböffnungen auf. Die beiden Trommelkörper 190,192 sind gegeneinander verstellbar, so daß sich die Sieböffnungen in unterschiedlichem Maße überlappen. Hierfür gibt es verschiedene Möglichkeiten.

Bei der Ausführung nach Fig.11 weisen die beiden Trommelkörper 190,192 übereinstimmende, rautenförmige Sieböffnungen 194 bzw. 196 auf. Die Sieböffnungen 194 des Trommelkörpers 190 sind gestrichelt gezeichnet. Eine Diagonale 198,200 jeder Sieböffnung 190 bzw. 192 verläuft jeweils in axialer Richtung der Siebtrommel 188, d.h. waagerecht in Fig.11. Die Trommelkörper 190 und 192 sind so zueinander angeordnet, daß die axialen Diagonalen 198,200 zusammengehöriger Sieböffnungen 194 bzw. 196 jeweils auf einer Mantellinie 202 der Siebtrommel 188 liegen. Die beiden Trommelkörper 190 und 192 sind axial gegeneinander verstellbar.

Bei einer solchen axialen Verstellung der beiden Trommelkörper 190 und 192 gegeneinander ändert sich die Überlappung der Sieböffnungen 194 und 196 und damit die Größe der effektiven, freien Sieböffnung 204. Diese freie Sieböffnung 204 ist in Fig.11 gestrichelt eingetragen. Man erkennt, daß auf diese Weise die Größe der freien Sieböffnung 204 zwischen null und der vollen Fläche der Sieböffnungen 194 und 196 stetig verändert werden kann, wobei aber die Gestalt der freien Sieböffnungen unverändert rautenförmig bleibt.

Eine andere Möglichkeit ist in Fig.12 dargestellt.

In Fig.12 bilden die beiden Trommelkörper 190 und 192 jeweils ein Gitter 206 bzw. 208, wobei das Gitter 206 des Trommelkörpers 190 wieder gestrichelt dargestellt ist. Die Gitter 206 und 208 haben jeweils quadratische Sieböffnungen. Die Trommelkörper 190 und 192 sind wahlweise aus einer ersten Stellung, in welcher die Sieböffnungen fluchten, in axialer Richtung in eine zweite Stellung bewegbar, die gegenüber der ersten Stellung um eine halbe Seitenlänge der Sieböffnungen versetzt ist. Eine solche Verschiebung der Trommelkörper 190 und 192 führt zu effektiven Sieböffnungen, deren Fläche die Hälfte der Fläche der ursprünglichen Sieböffnungen beträgt, die aber länglichrechteckige Gestalt haben. Bei der dargestellten Ausführung sind daher die beiden Trommelkörper 190 und 192 von der ersten in die zweite Stellung gleichzeitig in Umfangsrichtung um eine halbe Seitenlänge der Sieböffnung verstellbar. Es ergibt sich dann die in Fig.12 dargestellte Konfiguration. Die effektiven Sieböffnungen sind wieder quadratisch. Ihre Fläche ist jedoch auf ein Viertel verringert.

Die Anordnung nach Fig.12 gestattet zwar nicht wie die Anordnung nach Fig.11 eine stetige Veränderung der freien Sieböffnungen von null bis Maximum, sie hat aber den Vorteil, daß die Gesamtfläche aller Sieböffnungen größer ist als bei der Anordnung nach Fig.11, und daß diese Gesamtfläche bei einer Veränderung der Größe jeder einzelnen Sieböffnung im wesentlichen unverändert bleibt.

**Patentansprüche**

1. Siebvorrichtung zum Aussieben von Komposterde aus verrottetem, organischen Material mit
   (a) einem Einfülltrichter (24) zum Eingeben des Materials, der aus einem oben offenen Gehäuse besteht, auf dessen Boden ein erstes Förderband (26) läuft,
   (b) einer an beiden Enden offene Siebtrommel (38), deren Achse parallel zur Förderrichtung des ersten Förderbandes (26) verläuft und in welche das erste Förderband (26) im Betrieb auf einer Seite hineinragt,
   (c) Antriebsmitteln (70, 68, 66), durch welche der Siebtrommel eine Drehbewegung um ihre Achse erteilbar ist,
   (d) Mitteln (74) zum Transportieren des Materials längs der Siebtrommel (38) von der einen Seite zur gegenüberliegenden anderen während der Drehbewegung,
   (e) einem zweiten, unter der Siebtrommel (38) laufenden Förderband (76) zum Austragen der durch die Siebtrommel (38) hindurchfallenden Erde,
   (f) Mitteln (106, 112, 130) zum Austragen der von der Siebtrommel zurückgehaltenen Bestandteile des Materials,
   (g) einen parallelen Verlauf der Förderrichtung des ersten Förderbandes (26) und der Achse der Siebtrommel (38), wobei
   (h) der Einfülltrichter (24) eine rechteckige Einfüllöffnung bildet,
   (i) von zwei gegenüberliegenden Seitenwänden (32, 34) des Einfülltrichters (24) eine Seitenwand (32) vertikal angeordnet ist und die gegenüberliegende Seitenwand (34) schräg nach unten verläuft, und
   (j) die besagten gegenüberliegenden Seitenwände (32, 34) parallel zur Förderrichtung des ersten Förderbandes (26) verlaufen.

2. Siebvorrichtung nach Anspruch 1, **dadurch gekennzeichnet, daß**
   (a) der Einfülltrichter (24) mit dem ersten Förderband (26) in einer zur Achse der Siebtrommel (38) parallelen Richtung verschiebbar geführt ist und
   (b) ein Stellmotor (134) vorgesehen ist, durch welchen der Einfülltrichter (24) soweit zurückführbar ist, daß das erste Förderband (26) vollständig aus der Siebtrommel (38) zurückgezogen ist.

3. Siebvorrichtung nach Anspruch 2, **dadurch gekennzeichnet, daß** die Siebtrommel (38) auf zwei Paaren von Rollen (62, 64) drehbar gelagert ist.

4. Siebvorrichtung nach Anspruch 3, **dadurch gekennzeichnet, daß**
   (a) die Rollen (62, 64) frei drehbar sind und
   (b) als Antriebsmittel an der Siebtrommel (38) eine Verzahnung (66) angebracht ist, die mit einem motorisch angetriebenen, mit Zähnen versehenen Rad (68) in Eingriff ist.

5. Siebvorrichtung nach Anspruch 4, **dadurch gekennzeichnet, daß**
   (a) die Verzahnung (66) von einer um den Umfang der Siebtrommel (38) herumgelegten, mit dieser verschweißten Kette gebildet ist und
   (b) das mit Zähnen versehene Rad (68) ein Kettenrad ist.

6. Siebvorrichtung nach einem der Ansprüche 1 bis 5, **dadurch gekennzeichnet, daß** die Mittel zum Transportieren des Materials längs der Siebtrommel (38) von einer auf der Innenseite der Siebtrommel (38) angebrachten, schraubenförmigen Mitnehmerleiste (74) gebildet sind.

7. Siebvorrichtung nach Anspruch 6, **dadurch gekennzeichnet, daß** die Höhe der Mitnehmerleiste (74) etwa zehn Zentimeter beträgt.

8. Siebvorrichtung nach einem der Ansprüche 1 bis 7, **dadurch gekennzeichnet, daß**
   (a) das zweite Förderband (76) das durch die Siebtrommel (38) hindurchfallende Material in Richtung auf den Einfülltrichter (24) hin fördert,
   (b) unter dem einfülltrichterseitigen Ende des zweiten Förderbandes (76) ein drittes Förderband (78) angeordnet ist, das quer zur Förderrichtung des zweiten Förderbandes (76) fördert und
   (c) unter dem austragseitigen Ende des dritten Förderbandes (78) ein viertes Förderband (80) angeordnet ist, welches im Betrieb von der Siebvorrichtung seitlich vorspringt und das gesiebte Material aufläuft.

9. Siebvorrichtung nach Anspruch 8, **dadurch gekennzeichnet, daß** als Mittel zum Austragen der von der Siebtrommel zurückgehaltenen Bestandteile des Materials an der besagten anderen Seite der Siebtrommel (38) unterhalb der Siebtrommel (38) ein sich in der Verlängerung der Siebtrommel (38) erstreckendes fünftes Förderband (106) angeordnet ist.

10. Siebvorrichtung nach Anspruch 8 oder 9, **dadurch gekennzeichnet, daß** zwischen dem dritten und dem vierten Förderband (78 bzw. 80) eine mit einem Gebläse verbundene Ausblasvorrichtung (86) vorgesehen ist, durch welche leichte Bestandteile wie Kunststoff aus dem gesiebten Material ausgeblasen werden.

11. Siebvorrichtung nach Anspruch 10, **dadurch gekennzeichnet, daß** die Ausblasvorrichtung (86)

(a) eine Trommel (88) unterhalb des Endes des dritten Förderbandes aufweist, deren Mantelfläche von zueinander parallelen Stäben (90) gebildet ist, zwischen denen schmale Luftaustrittsschlitze (92) liegen,

(b) die Trommel (88) um ihre quer zur Förderrichtung des dritten und des vierten Förderbandes (78 bzw. 80) verlaufende Achse angetrieben ist und

(c) ein Gebläseluftstrom in das Innere der Trommel (88) einleitbar ist, wobei leichte Bestandteile des gesiebten Materials, wie Kunststoff, weggeblasen werden, während schwerere Bestandteile wie Erde von der Trommel (88) auf das vierte Förderband (80) mitgenommen werden.

12. Siebvorrichtung nach Anspruch 11, **gekennzeichnet durch** Mittel (104) zum seitlichen Wegleiten der weggeblasenen Bestandteile.

13. Siebvorrichtung nach Anspruch 9, **dadurch gekennzeichnet, daß** an der besagten anderen Seite der Siebtrommel (38) eine Absaugvorrichtung (112) angeordnet ist zum Absaugen leichter Bestandteile, wie von Kunststoffbeuteln, in den von der Siebtrommel (38) zurückgehaltenen Bestandteilen des Materials.

14. Siebvorrichtung nach Anspruch 9, **dadurch gekennzeichnet, daß** an der besagten anderen Seite der Siebtrommel (38) ein Metallabscheider (120) vorgesehen ist.

15. Siebvorrichtung nach einem der Ansprüche 1 bis 14, **dadurch gekennzeichnet, daß**

(a) die Antriebsmittel zum Antreiben der Siebtrommel (38) eine erste Pumpe (144) enthalten, welche von einer Kraftmaschine (136) angetrieben wird, sowie einen von der ersten Pumpe (144) gespeisten ersten Hydraulikmotor (70),

(b) das erste Förderband (24) von einem zweiten Hydraulikmotor (142) angetrieben ist, der von einer zweiten, ebenfalls von der Kraftmaschine (136) angetriebenen Pumpe (138) gespeist wird, deren Fördervolumen regelbar ist,

(c) ein Druckfühler (146) vorgesehen ist, der auf den Arbeitsdruck des ersten Hydraulikmotors (70) anspricht,

(d) ein Regler (148) von dem Signal des Druckfühlers (146) beaufschlagt ist und

(e) das Fördervolumen der zweiten Pumpe (138) durch den Regler (148) auf einen geringeren Wert zurückfahrbar ist, wenn der von dem Druckfühler (146) erfaßte Arbeitsdruck (p) des ersten Hydraulikmotors (70) einen vorgegebenen Wert überschreitet.

16. Siebvorrichtung nach einem der Ansprüche 1 bis 15, **dadurch gekennzeichnet, daß** Einfülltrichter (24) und Siebtrommel (38) auf einem fahr- und lenkbaren Chassis (10) montiert sind.

17. Siebvorrichtung nach den Ansprüchen 9 und 16, **dadurch gekennzeichnet, daß** das vierte Förderband (80) und das fünfte Förderband (106) schwenkbar an dem Chassis (10) angelenkt und durch hydraulische Stellmotore (82 bzw. 108) in eine vertikale Stellung hochschwenkbar sind.

18. Siebvorrichtung nach Anspruch 16, **dadurch gekennzeichnet, daß** die Siebvorrichtung auf dem fahr- und lenkbaren Chassis (10) mit einem Zugfahrzeug kuppelbar ist.

19. Siebvorrichtung nach Anspruch 16, **dadurch gekennzeichnet, daß** auf dem Chassis (10) eine Brennkraftmaschine (136) zum Antrieb der Pumpen (138, 144) für die Hydrauliksysteme angeordnet ist.

20. Siebvorrichtung nach Anspruch 19, **dadurch gekennzeichnet, daß** Antriebsräder (12) des fahrbaren Chassis (10) wahlweise durch Hydraulikmotoren (158, 160) antreibbar sind, die von einer durch die Brennkraftmaschine (136) angetriebenen Hydraulikpumpe (162) gespeist sind.

21. Siebvorrichtung nach Anspruch 20, **dadurch gekennzeichnet, daß** der hydraulische Antrieb der Antriebsräder (12) fernsteuerbar ist.

22. Siebvorrichtung nach Anspruch 16, **dadurch gekennzeichnet, daß**

(a) ein Lenkgestell (16) mit einem Paar von Rädern (14) über einen Drehkranz (18) um eine vertikale Achse (20) drehbar an dem Chassis (10) gelagert ist und

(b) ein hydraulischer Stellmotor (168, 180) an dem Lenkgestell (16) angreift und über eine Steuereinheit (170, 174) mit Druckflüssigkeit beaufschlagbar ist.

23. Siebvorrichtung nach Anspruch 22, **dadurch gekennzeichnet, daß** die Steuereinheit (174) durch eine Fernsteuerung betätigbar ist.

24. Siebvorrichtung nach einem der Ansprüche 1 bis 23, **dadurch gekennzeichnet, daß**

(a) die Siebtrommel (188) ein Paar von Trommelkörpern (190, 192) enthält, von denen der eine in dem anderen geführt ist,

(b) jeder der Trommelkörper (190, 192) Sieböffnungen aufweist und

(c) die beiden Trommekörper (190, 192) gegeneinander verstellbar sind, so daß sich die Sieböffnungen in unterschiedlichem Maße überlappen.

25. Siebvorrichtung nach Anspruch 24, **dadurch gekennzeichnet, daß**

(a) die beiden Trommelkörper (190, 192) übereinstimmende rautenförmige Sieböffnungen (194, 196) aufweisen, deren eine Diagonale (198, 200) jeweils in axialer Richtung verläuft,

(b) die Trommelkörper (190, 192) so zueinander angeordnet sind, daß die axialen Diagonalen (198, 200) zusammengehöriger Sieböffnungen (194, 196) jeweils auf einer Mantellinie (202) der Siebtrommel (188) liegen und

(c) die beiden Trommelkörper (190, 192) axial gegeneinander verstellbar sind.

26. Siebvorrichtung nach Anspruch 24, **dadurch gekennzeichnet, daß**

(a) die beiden Trommelkörper (190, 192) jeweils ein Gitter (206, 208) mit quadratischen Sieböffnungen bilden und

(b) die Trommelkörper (190, 192) wahlweise aus einer ersten Stellung, in welcher die Sieböffnungen fluchten, in axialer Richtung in eine zweite Stellung bewegbar sind, die gegenüber der ersten Stellung um eine halbe Seitenlänge der Sieböffnungen versetzt ist.

27. Siebvorrichtung nach Anspruch 26, **dadurch gekennzeichnet, daß** die beiden Trommelkörper (190, 192) von der ersten in die zweite Stellung gleichzeitig in Umfangsrichtung um eine halbe Seitenlänge der Sieböffnung verstellbar sind.

## Claims

1. Sieve device for sieving out compost from rotten organic material, characterised by

(a) a filling funnel (24) for feeding the material, said filling funnel consisting of a housing open at the top, a first conveyer belt (26) running on the bottom of said housing,

(b) a sieve drum (38) open at both ends, the axis of said sieve drum extending parallel to the conveying direction of said first conveyer belt (26), the first conveyer belt (26), in operation, projecting into said sieve drum on one side thereof,

(c) driving means (70,68,66) arranged to impart to the sieve drum rotary movement about its axis,

(d) means (74) for transporting the material along the sieve drum from one side to the opposite other side during said rotary movement,

(e) a second conveyer belt (76) running below the sieve drum (38) for outfeeding the earth falling through the sieve drum (38),

(f) means (106,112,130) for outfeeding the material constituents retained by the sieve drum,

(g) a parallel course of the conveying direction of the first conveyer belt (26) and the axis of the sieve drum, whereby

(h) the filling funnel (24) forms a rectangular feed opening,

(i) one side wall (32) of two opposite side walls (32,34) of the filling funnel (24) is vertically disposed whereas the opposite side wall (34) extends obliquely downwardly, and

(j) said opposite side walls (32,34) extend parallel to the conveying direction of the first conveyor belt.

2. Sieve device as set forth in claim 1, characterised in that

(a) the filling funnel (24) with the first conveyer belt (26) is displaceably guided in a direction parallel to the axis of the sieve drum (38) and

(b) a servomotor (134) is provided through which the filling funnel (24) can be moved back guidedly to such an extent that the first conveyer belt (26) is completely retracted from the sieve drum (38).

3. Sieve device as set forth in claim 2, characterised in that the sieve drum (38) is rotatably mounted on two pairs of rollers (62,64).

4. Sieve device as set forth in claim 3, characterised in that

(a) the rollers (62,64) are freely rotatable and

(b) a toothing (66) is arranged on the sieve drum (38) as driving means and meshes with a motor-driven wheel (68) provided with teeth.

5. Sieve device as set forth in claim 4, characterised in that

(a) the toothing (66) is formed by a chain laid around the circumference of the sieve drum (38) and welded thereto and

(b) the wheel (68) provided with teeth is a sprocket wheel.

6. Sieve device as set forth in any one of claims 1 to 5, characterised in that the means for transporting the material along the sieve drum (38) is formed by a helically shaped conveying ledge (74) arranged at the inner side of the sieve drum (38).

7. Sieve device as set forth in claim 6, characterised in that the height of the conveying ledge (74) is about ten centimeters.

8. Sieve device as set forth in any one of claims 1 to 7, characterised in that

(a) the second conveyer belt (76) conveys the material falling through the sieve drum (38) in a direction towards the filling funnel (24),

(b) a third conveyer belt (78) is arranged below the end of the second conveyer belt (76) which end is on the side of the filling funnel, and conveys transverse to the conveying direction of the second conveyer belt (76) and

(c) a fourth conveyer belt (80) is arranged below the discharge end of the third conveyer belt (78), projects laterally from the sieve device during operation and heaps up the sieved material.

9. Sieve device as set forth in claim 8, characterised in that, as said means for outfeeding the material constituents retained by the sieve drum, a fifth conveyer belt (106) which extends in the extension of the sieve drum (38), is arranged on said other side of the sieve drum (38) below the sieve drum (38).

10. Sieve device as set forth in claim 8 or 9, characterised in that a blow-out device (86) connected to a blower, is provided between the third and the fourth conveyer belt (78 and 80, respectively) by which blow-out device light-weight constituents like plastics are blown out from the sieved material.

11. Sieve device as set forth in claim 10, characterised in that the blow-out device (86)

(a) comprises a drum (88) below the end of the third conveyer belt, the peripheral surface of which drum is formed by rods (90) which are parallel to each other and between which small air escape slots (92) are located,

(b) the drum (88) is driven about its axis which extends transverse to the conveying direction of the third and the fourth conveyer belts (78 and 80, respectively) and

(c) a blower air current can be directed into the interior of the drum (88) whereby lightweight constituents of the sieved material like plastics is blown away whereas more heavy constituents like earth are entrained by the drum (88) onto the fourth conveyer belt (80).

12. Sieve device as set forth in claim 11, characterised by means (104) for laterally directing away the blown-away constituents.

13. Sieve device as set forth in claim 9, characterised in that a suction device (112) is arranged on said other side of the sieve drum (38) for sucking off light-weight constituents like plastic bags in the material constituents retained by the sieve drum (38).

14. Sieve device as set forth in claim 9, characterised in that a metal separator (120) is provided on said other side of the sieve drum (38).

15. Sieve device as set forth in any one of claims 1 to 14, characterised in that

(a) the driving means for driving the sieve drum (38) contain a first pump (144) which is driven by a power engine (136), and a first hydraulic motor (70) supplied by the first pump (144),

(b) the first conveyer belt (24) is driven by a second hydraulic motor (142) which is supplied by a second pump (138) also driven by the power engine (136), and which has a regulatable volumetric displacement,

(c) a pressure sensor (146) is provided which responds to the working pressure of the first hydraulic motor (70),

(d) a regulator (148) receiving the signal of the pressure sensor (146) and

(e) the volumetric displacement of the second pump (138) is reducible to a smaller value when the working pressure (p) of the first hydraulic motor (70) detected by the pressure sensor exceeds a predetermined value.

16. Sieve device as set forth in any one of claims 1 to 15, characterised in that the filling funnel (24) and the sieve drum (38) are mounted at a movable and steerable chassis (10).

17. Sieve device as set forth in claims 9 and 16, characterised in that the fourth conveyer belt (80) and the fifth conveyer belt (106) are pivotably linked to the chassis (10) and are upwardly pivotable into a vertical position by hydraulic servo motors (82 and 108, respectively).

18. Sieve device as set forth in claim 16, characterised in that the sieve device on the movable and steerable chassis (10) is arranged to be coupled to a tractor vehicle.

19. Sieve devise as set forth in claim 16, characterised in that an internal-combustion engine (136) is arranged on the chassis (10) for driving the pumps (138,144) for the hydraulic systems.

20. Sieve device as set forth in claim 19, characterised in that drive wheels (12) of the movable chassis (10) are selectively drivable by hydraulic motors (158,160) which are supplied by a hydraulic pump (162) driven by the internal-combustion engine (136).

21. Sieve device as set forth in claim 20, characterised in that the hydraulic drive of the drive wheels (12) is remotely controllable.

22. Sieve device as set forth in claim 16, characterised in that
    (a) a steering support (16) having a pair of wheels (14) is mounted for rotation about a vertical axis on the chassis (10) via a live ring (18) and
    (b) a hydraulic servo motor (168,180) engages the steering support (16) and is arranged to be supplied with pressure fluid through a control unit (170,174).

23. Sieve device as set forth in claim 22, characterised in that the control unit (174) is operable by a remote control.

24. Sieve device as set forth in any one of claims 1 to 23, characterised in that

(a) the sieve drum (188) includes a pair of drum bodies (190,192) one of which is guided in the other,
(b) each of the drum bodies (190,192) comprises sieve openings and
(c) the two drum bodies (190,192) are adjustable relative to each other such that the sieve openings overlap to variable extent.

25. Sieve device as set forth in claim 24, characterised in that
    (a) the two drum bodies (190,192) comprise identical diamond-shaped sieve openings (194,196), one diagonal (198,200) of which extends in axial direction,
    (b) the drum bodies (190,192) are arranged relative to each other such that the axial diagonals (198,200) of associated sieve openings (194,196) are each located on a generatrix (202) of the sieve drum (188) and
    (c) the two drum bodies (190,192) are axially adjustable relative to each other.

26. Sieve device as set forth in claim 24, characterised in that
    (a) the two drum bodies (190,192) each form a grid (206,208) having square sieve openings and
    (b) the drum bodies (190,192) are selectively movable in axial direction from a first position in which the sieve openings are in alignment, into a second position which is offset from the first position by half a side length of the sieve openings.

27. Sieve device as set forth in claim 26, characterised in that the two drum bodies (190,192) are adjustable from the first into the second position and at the same time rotatable by half a side length of the sieve opening in circumferential direction.

**Revendications**

1. Dispositif de passoire destiné à tamiser de la terre de compostage de matière organique pourrie, comprenant
    (a) un entonnoir de remplissage (24) destiné à introiduire la matière et constitué d'un boîtier ouvert, sur le fond duquel passe une première courroie de transport (26),
    (b) un tambour tamiseur (38) ouvert aux deux extrémités, dont l'axe s'étend parallèlement à la direction de transport de la première courroie de transport (26) et dans lequel la première courroie de transport (26) s'étend sur un côté lors de l'opération,
    (c) des moyens d'entraînement (70, 68, 66) par lesquels le tambour tamiseur peut être soumis à un mouvement rotatif autour de son axe,

(d) des moyens (74) destinés au transport de la matière le long du tambour tamiseur (38) d'un côté à l'autre côté opposé lors du mouvement rotatif,

(e) une seconde courroie de transport (76) passant au dessous du tambour tamiseur (38) et destinée à décharger la terre tombant par le tambour tamiseur (38),

(f) des moyens (106, 112, 130) destinés à décharger les composants de la matière retenus par le tambour tamiseur,

(g) un cours parallèle de la direction de transport de la première courroie de transport (26) et de l'axe du tambour tamiseur (38),

(h) l'entonnoir de remplissage (24) formant une ouverture de remplissage rectangulaire,

(i) de deux parois latérales opposées (32, 34) de l'entonnoir de remplissage (24), une paroi latérale étant disposée verticalement et la paroi latérale opposée (34) s'étandant obliquement vers le bas, et

(j) lesdites parois latérales opposées (32, 34) s'étendant parallèlement à la direction de transport de la première courroie de transport (26).

2. Dispositif de passoire selon la revendication 1, **caractérisé par le fait que**

(a) l'entonnoir de remplissage (24) avec la première courroie de transport (26) est guidé de sorte à pouvoir être déplacé dans une direction parallèle à l'axe du tambour tamiseur (38), et

(b) un servomoteur (134) est prévu, par lequel l'entonnoir de remplissage (24) peut être ramené jusqu'à ce que la première courroie de transport (26) soit complètement retirée du tambour tamiseur (38).

3. Dispositif de passoire selon la revendication 2, **caractérisé par le fait que** le tambour tamiseur (38) est monté rotativement sur deux paires de rouleaux (62, 64).

4. Dispositif de passoire selon la revendication 3, **caractérisé par le fait que**

(a) les rouleaux (62, 64) sont librement rotatifs, et

(b) comme moyens d'entraînement une denture (66) est montée au tambour tamiseur (38), qui est en engrenage avec une roue (68) entraînée par moteur et munie de dents.

5. Dispositif de passoire selon la revendication 4, **caractérisé par le fait que**

(a) la denture (66) est formée par une chaîne posée autour de la circonférence du tambour tamiseur (38) et soudée à celui-ci, et

(b) la roue (68) munie de dents est une roue à chaîne.

6. Dispositif de passoire selon l'une des revendications 1 à 5, **caractérisé par le fait que** les moyens destinés au transport de la matière le long du tambour tamiseur (38) sont formés par un listel d'entraînement (74) hélicoidal monté sur le côté intérieur du tambour tamiseur (38).

7. Dispositif sleon la revendication 6, **caractérisé par le fait que** la hauteur du listel d'entraînement (74) s'élève à environ dix centimètres.

8. Dispositif de passoire selon l'une des revendications 1 à 7, **caractérisé par le fait que**

(a) la seconde courroie de transport (76) transporte la matière tombant par le tambour tamiseur (38) dans la direction de l'entonnoir de remplissage (24),

(b) une troisième courroie de transport (78) transportant transversalement à la direction de transport de la seconde courroie de transport (76), est disposée sous l'extrémité de la seconde courroie de transport (76) sur le côté de l'entonnoir de remplissage (38), et

(c) une quatrième courroie de transport (80) est disposée sous l'extrémité du côté décharge de la troisième courroie de transport (78) et saillie latéralement du dispositif de passoire lors de l'opération et décharge la matière tamisée.

9. Dispositif de passoire selon la revendication 8, **caractérisé par le fait que** comme moyens déstinés à décharger les composants de la matière retenus par le tambour tamiseur, une cinquième courroie de tranport (106) s'étendant dans le prolongement du tambour tamiseur (38) est disposée sur ledit autre côté du tambour tamiseur (38) au dessous de celui-ci.

10. Dispositif de passoire selon la revendication 8 ou 9, **caractérisé par le fait qu'**un dispositif de vidange (86) relié à un ventilateur, par lequel des composants faibles tels que des matières plastiques sont soufflés de la matière tamisée, est disposé entre la troisième et la quatrième courroie de transport (78 et 80).

11. Dispositif de passoire selon la revendication 10, **caractérisé par le fait que** le dispositif de vidange (86)

(a) présente un tambour (88) au dessous de l'extrémité de la troisième courroie de transport, dont la nappe est formée par des tiges (90) parallèles l'une à l'autre, entre lesquelles sont situées des fentes de sortie d'air (92) étroites,

(b) le tambour (88) est entraîné autour de son axe s'étendant transversalement à la direction de transport de la troisième et la quatrième courroie de transport (78 et 80), et

(c) un courant d'air de ventilateur peut être introduit dans l'intérieur du tambour (88), des composants faibles de la matière tamisée, tels que des matières plastiques, étant soufflés en dehors tandisque des composants lourds tels que de la terre, étant entraînés par le tambour (88) sur la quatrième courroie de transport (80).

12. Dispositif de passoire selon la revendication 11, **caractérisé par** des moyens (104) destinés à écarter latéralement les composants soufflés hors du tambour.

13. Dispositif de passoire selon la revendication 9, **caractérisé par le fait qu'**un dispositif d'aspiration (112) destiné à aspirer des composants faibles tels que des sacs en plasiques, dans les composants de la matière retenus par le tambour tamiseur (38), est disposé sur ledit autre côté du tambour tamiseur (38).

14. Dispositif de passoire selon la revendication 9, **caractérisé par le fait qu'**un coupeur de métal (120) est prévu sur ledit autre côté du tambour tamiseur (38).

15. Dispositif de passoire selon l'une des revendications 1 à 14, **caractérisé par le fait que**

(a) les moyens d'entraînement destinés à entraîner le tambour tamiseur (38) comprennent une première pompe (144) entraînée par une machine motrice (136) ainsi qu'un moteur hydraulique (70) alimenté par la première pompe (144),

(b) la première courroie de transport (24) est entraînée par un second moteur hydraulique (142) alimenté par une seconde pompe également entraînée par la machine motrice (136) et dont le volume de transport est réglable,

(c) un détecteur de pression (146) est prévu, qui répond à la pression d'opération du premier moteur hydraulique (70),

(d) le signal du détecteur de pression (146) est appliqué à un régulateur (148), et

(e) le volume de transport de la seconde pompe (138) peut être ramené à une valeur faible par le régulateur lorsque la pression d'opération du moteur hydraulique (70) détectée par le détecteur de pression (146) dépasse une valeur prédéterminée.

16. Dispositif de passoire selon l'une des revendications 1 à 15, **caractérisé par le fait que** l'entonnoir de remplissage (24) et le tambour tamiseur (38) sont montés sur un châssis roulable et commandable (10).

17. Dispositif de passoire selon les revendications 9 à 16, **caractérisé par le fait que** la quatrième courroie de transport (80) et la cinquième courroie de transport (106) sont articulées de sorte à pouvoir pivoter sur le châssis (10) et peuvent être montées par pivotement dans une position verticale par des servomoteurs hydrauliques (82 et 108).

18. Dispositif de passoire selon la revendication 16, **caractérisé par le fait que** le dispositif de passoire sur le châssis roulable et commandable (10) peut être accouplé à un véhicule de train.

19. Dispositif de passoire selon la revendication 16, **caractérisé par le fait qu'**un moteur à combustion interne (136) destiné à l'entraînement des pompes (138, 144) pour les systèmes hydrauliques est disposé sur le châssis (10).

20. Dispositif de passoire selon la revendication 19, **caractérisé par le fait que** les roues d'entraînement (12) du châssis roulable (10) sont sélectivement entraînables par des moteurs hydrauliques (158, 160) alimentés par une pompe hydraulique (162) entraînée par le moteur à combustion interne (136).

21. Dispositif de passoire selon la revendication 20, **caractérisé par le fait que** l'entraînement hydraulique des roues d'entraînement (12) sont télécommandables.

22. Dispositif de passoire selon la revendication 16, **caractérisé par le fait que**

(a) un bissel (16) ayant une paire de roues (14) est monté par une couronne de pivotement (18) sur le châssis (10) de sorte à pouvoir tourner autour d'un axe vertical, et

(b) un servomoteur hydraulique (168, 180) est appliqué au bissel (16) et un fluide est appliqué à celui-ci par une unité de commande (170, 174).

**23.** Dispositif de passoire selon la revendication 22, **caractérisé par le fait que** l'unité de commande (174) est actionnable par une télécommande.

**24.** Dispositif de passoire selon l'une des revendications 1 à 23, **caractérisé par le fait que**

(a) le tambour tamiseur (188) comprend une paire de corps de tambour (190, 192) dont l'un est guidé dans l'autre,

(b) chaque corps de tambour (190, 192) présente des ouvertures de passoire, et

(c) les deux corps de tambour (190. 192) sont déplacables l'un par rapport à l'autre de sorte que les ouvertures de passoire se chevauchent dans une mesure différente.

**25.** Dispositif de passoire selon la revendication 24, **caractérisé par le fait que**

(a) les deux corps de tambour (190, 192) présentent des ouvertures (194, 196) coincidant en forme de losange dont une diagonale (198, 200) s'étend respectivement en direction axiale,

(b) les corps de tambour (190, 192) sont disposés l'un par rapport à l'autre de sorte que les diagonales axiales (198, 200) d'ouvertures de passoire associées (194, 196) sont situées respectivement sur une ligne de nappe (202) du tambour tamiseur (188), et

(c) les deux corps de tambour (190, 192) sont axialement déplacable l'un par rapport à l'autre.

**26.** Dispositif de passoire selon la revendication 24, **caractérisé par le fait que**

(a) les deux corps de tambour (190, 192) forment respectivement une grille (206, 208) ayant des ouvertures de passoire quadratique, et

(b) les corps de tambour (190, 192) sont sélectivement déplacables d'une première position dans laquelle les ouvertures de passoire sont alignées, en direction axiale dans une seconde position qui est déplacée d'une demi longueur de coté de l'ouverture de passoire par rapport à la première position.

**27.** Dispositif de passoire selon la revendication 26, **caractérisé par le fait que** les deux corps de tambour (190, 192) sont déplacables de la première dans la seconde position simultanément dans la direction circonférentielle d'une demi longueur de côté de l'ouverture de

passoire.

*Fig.1*

Fig.2

Fig.6

Fig.3

Fig.7

Fig. 5

Fig. 4

Fig.8

Fig. 9

Fig. 10

Fig.11

Fig.12

REGLER

166    164    162
158    140    140    12    160    140

*Fig.13*

14    182
18    174    186
16    178
180    176
184    140
14

*Fig.14*